# FASCICULE DE BREVET EUROPEEN

(11) **EP 2 277 676 B1**
(45) Date de publication et mention de la délivrance du brevet: **14.11.2012**
(21) Numéro de dépôt: 10170072.2
(22) Date de dépôt: 20.07.2010
(51) Int. Cl.: B29B 17/00

(54) **Système de compactage portable d'un récipient en matière plastique**
Tragbares Kompaktierungssystem für einen Plastikbehälter
System for portable compacting of a container made of plastic material

(30) Priorité: 24.07.2009 FR 0903656
(43) Date de publication de la demande: 26.01.2011
(73) Titulaire: Abergel, Edmond, 75012 Paris (FR)
(72) Inventeur: Abergel, Edmond, 75012 Paris (FR); Busson, Damien, 92190 Meudon (FR)
(74) Mandataire: Debay, Yves

(56) Documents cités:
- EP-A2- 0 492 043
- EP-A2- 1 149 675
- WO-A1-00/21725
- WO-A1-2005/077629

## Description

La présente invention se rapporte au domaine des systèmes destinés à la compaction des récipients en plastique et plus particulièrement au domaine des systèmes destinés à la compaction des récipients en plastique par chauffage des parois du récipient.

La consommation de boisson liquide s'effectue généralement par leur distribution et leur vente dans des récipients en plastiques, souvent des bouteilles de forme sensiblement cylindrique. Ces récipients plastiques, une fois vides, ont l'inconvénient de prendre de la place et nécessite des containers de récupération dont le volume doit être conséquent pour permettre le stockage de ces récipients avant leur recyclage. Une alternative à ce problème d'encombrement consiste à compacter les bouteilles une fois qu'elles sont vidées et avant que ces dernières ne soient stockées dans un container destiné à rejoindre une déchèterie.

Le document FR2693144 propose un dispositif permettant de faciliter cette opération de compaction. Le dispositif comprend une bouilloire qui maintient un volume d'eau à une température proche de 100°C. La bouteille à compacter est alors plongée au niveau d'une de ses extrémités dans le volume d'eau chaude pour permettre la fusion de ses parois plastiques. La bouteille, en contact avec le fond du volume d'eau est alors pressée par un piston qui assure sa compaction. Cependant un tel dispositif suppose d'avoir des conditions de manipulation sécurisée pour éviter tout risque de brûlure. En effet, le volume d'eau chauffée étant ouvert, son renversement accidentel peut être dangereux. Par ailleurs, ce dispositif présente également comme inconvénient une difficulté dans la récupération de la bouteille compactée puisque celle-ci se trouve dans la partie du dispositif qui contient l'eau chaude.

Le document W02007060651 enseigne également un dispositif de compaction pour bouteilles, ce dispositif comprenant notamment une mâchoire qui écrase chaque bouteille à compresser concomitamment à un chauffage d'une de ses extrémités pour aboutir à un récipient compacté selon une forme et un volume prédéfini. Un tel dispositif présente néanmoins l'inconvénient d'avoir une compaction relativement lente en n'opérant un chauffage et donc un ramollissement dés parois au niveau d'une seule des extrémités du récipient.

Le document EP 1 149 675 propose également un dispositif de compaction de bouteilles, ce dispositif comprenant notamment une mâchoire actionnée par un ressort et qui écrase chaque bouteille à compresser, cette opération étant facilitée par un élément de production et de projection de vapeur à l'intérieur de chaque bouteille. Un tel dispositif présente. également l'inconvénient d'avoir une compaction lente, dans l'attente du ramollissement de la bouteille à écraser.

Le document WO 00/21725 A1 propose un dispositif de compaction de bouteilles en plastique, comprenant notamment un élément générant de la vapeur associé à une buse projetant la vapeur formée à l'intérieur de la bouteille à compacter, réduisant ainsi la pression mécanique nécessaire à l'opération. Cependant, la manipulation d'un tel dispositif n'est pas forcément aisée, compte tenue du fait que la bouteille à compacter n'est pas insérée dans une enceinte et maintenue par des parois latérales.

La présente invention a pour objectif de palier un ou plusieurs inconvénients: de l'art antérieur en fournissant un système reposant sur un fonctionnement sécurisé tout en permettant d'effectuer un compactage domestique rapide et facilité.

Cet objectif est atteint grâce à un système de compactage portable selon la revendication 1.

Selon une variante de réalisation, le système de compactage de récipient est caractérisé en ce que l'enceinte est adiabatique et à l'intérieur de laquelle est orienté l'orifice d'au moins une buse du dispositif de projection de vapeur, des moyens de commande de la projection de vapeur empêchant la projection de vapeur lors de l'ouverture de l'enceinte.

Selon une variante de réalisation, le système de compactage de récipient est caractérisé en ce qui, le système comprenant une buse introduite dans le récipient à compacter au niveau d'un orifice du récipient, l'orifice de la buse du dispositif de projection de vapeur débouche à l'intérieur du récipient à compacter.

Selon une variante de réalisation, le système de compactage de récipient est **caractérisé en ce qu**'au moins une mâchoire du dispositif de compression comprend un orifice traversé par la buse.

Selon une variante de réalisation, le système de compactage de récipient est **caractérisé en ce que** l'enceinte adiabatique comprend un orifice arrangé pour permettre une évacuation de la vapeur d'eau une fois la compaction du récipient terminée.

Selon une variante de réalisation, le système de compactage de récipient est **caractérisé en ce que** l'enceinte adiabatique comprend un dispositif de refroidissement du récipient compacté.

Selon une variante de réalisation, le système de compactage de récipient est **caractérisé en ce qu**'il comprend un dispositif de contrôle et de commande relié à la résistance chauffante, et/ou au dispositif de projection de vapeur d'eau, et/ou à un organe du dispositif de compression, et/ou à au moins un dispositif de refroidissement du récipient compacté.

Selon une variante de réalisation, le système de compactage de récipient est **caractérisé en ce qu**'il comprend au moins un capteur de la température du récipient à compacter et/ou du contenu de l'enceinte adiabatique du système.

Selon une variante de réalisation, le système de compactage de récipient est **caractérisé en ce que** le système comprend au moins un dispositif de retrait et/ou d'éjection du récipient compacté.

Un autre objectif de l'invention est de proposer un procédé adapté au fonctionnement du système de compactage de l'invention.

Cet objectif est atteint grâce à un procédé de compactage de récipient mettant en jeu un système de compactage selon l'invention, **caractérisé en ce que** le procédé comprend :
- une étape de positionnement du récipient à compacter entre les mâchoires du dispositif de compaction,
- une étape de diffusion de vapeur d'eau à l'intérieur des parois du récipient à compacter,
- une étape de chauffage des parois du récipient à compacter,
- une étape de rapprochement des mâchoires du dispositif de compression,
- une étape de refroidissement du récipient compacté, et
- une étape de retour d'au moins une des mâchoires dans sa position initiale.

L'invention, avec ses caractéristiques et avantages, ressortira plus clairement à la lecture de la description faite en référence aux dessins annexés dans lesquels :

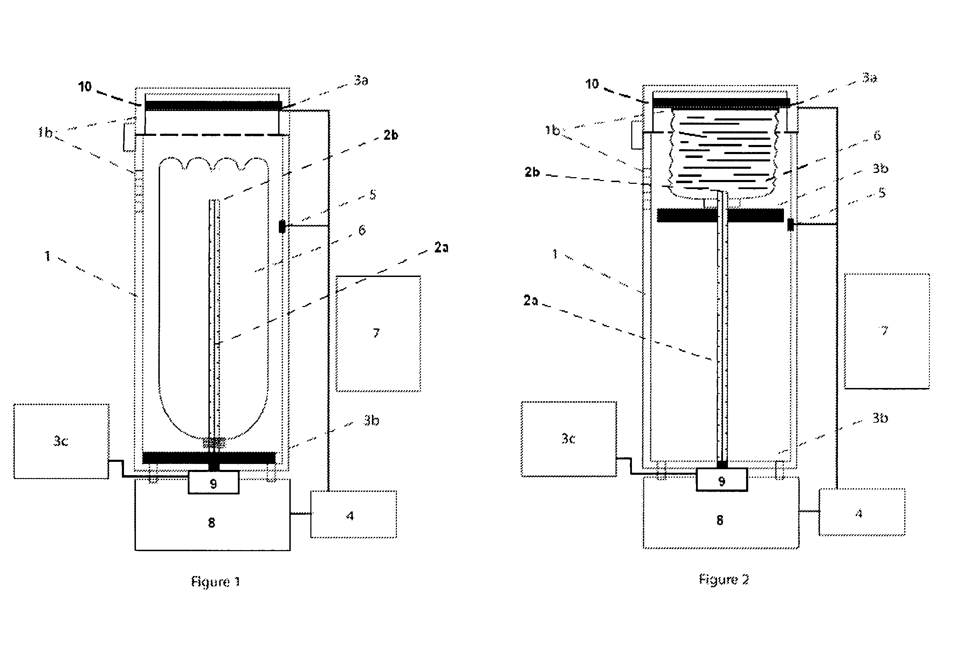

- la figure 1 représente un premier exemple de réalisation en coupe d'un système selon l'invention et selon une vue latérale, avant compactage,
- la figure 2 représente le premier exemple de réalisation en coupe d'un système selon l'invention et selon une vue latérale, en cours de compactage,

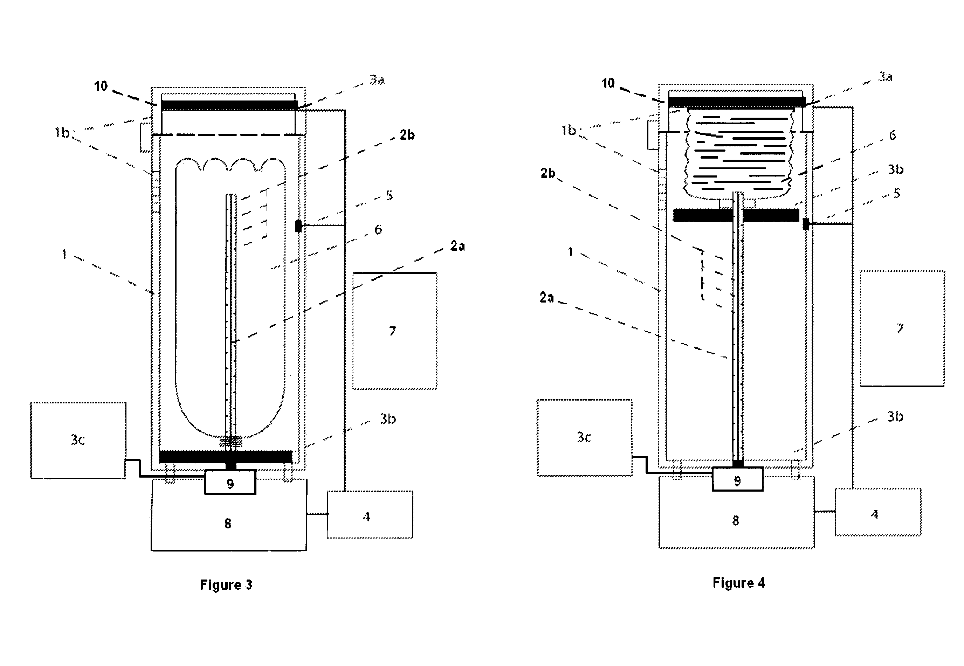

- la figure 3 représente un second exemple de réalisation en coupe d'un système selon l'invention et selon une vue latérale, avant compactage,
- la figure 4 représente le second exemple de réalisation en coupe d'un système selon l'invention et selon une vue latérale, en cours de compactage,

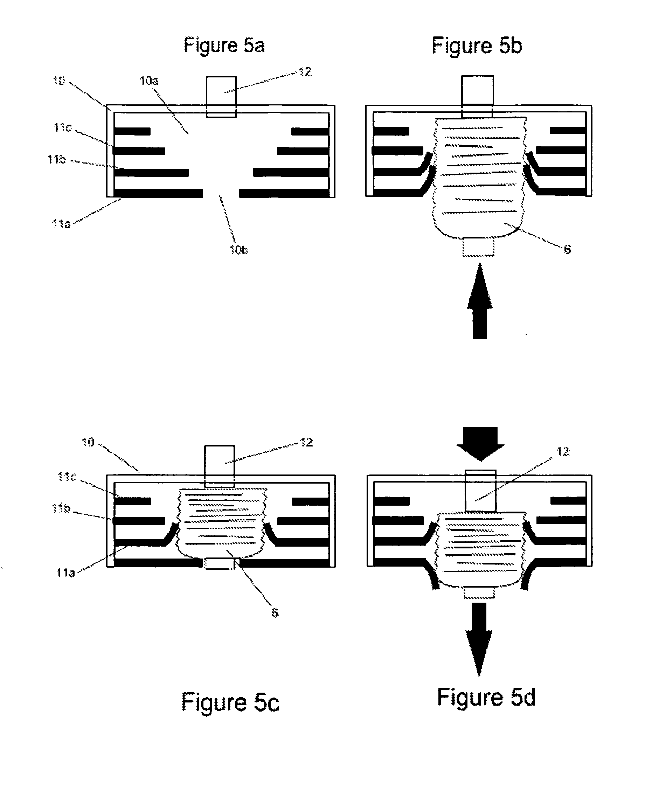

- les figures 5a, 5b, 5c et 5d présentent un exemple de réalisation d'un couvercle pour un système de compaction selon l'invention dont respectivement le logement est vide, puis reçoit un récipient en compression, stocke le récipient compressé puis éjecte le récipient compressé.

Le système de compactage de l'invention s'appuie sur la projection de vapeur d'eau à l'intérieur les parois d'un récipient (6) destiné à être compacté et disposé à l'intérieur du système de l'invention. Cette vapeur d'eau permet de générer un ramollissement de la structure plastique du récipient et ainsi de faciliter la compression et le compactage du récipient (6) en question.

Le système selon l'invention comprend ainsi un dispositif (8) de production, d'alimentation et/ou de récupération en vapeur d'eau qui projette la vapeur par l'intermédiaire d'une ou de plusieurs buses (2a) à l'intérieur des parois du récipient (6) à compacter. La production de vapeur d'eau est assurée grâce à l'intervention d'une résistance chauffante dont le fonctionnement est géré depuis un dispositif (4) de commande et de contrôle. Le système comprend également un dispositif (3a, 3b, 3c, 9) de compression muni d'une paire de mâchoires (3a, 3b) arrangée pour générer une compression du récipient (6) selon son axe principal. Selon le mode de réalisation, le dispositif (3a, 3b, 3c, 9) peut présenter ses deux mâchoires mobiles lors de la compaction, ou bien une première étant mobile tandis que la seconde est fixe. Ce dispositif (3a, 3b, 3c, 9) de compression peut être actionné manuellement ou selon un mode de réalisation préféré par un système moteur (3c, 9). Selon un mode de réalisation particulier, les mâchoires du dispositif (3a, 3b, 3c, 9) sont arrangées pour être adaptées à la forme du récipient (6) à compacter et en permettre une prise optimale pour en assurer la compression.

Selon un mode de réalisation préféré de l'invention, le système de compactage comporte une enceinte adiabatique (1) dans laquelle les mâchoires du dispositif (3a, 3b, 3c, 9) de compression sont arrangées pour opérer. Lorsque le système est utilisé, le récipient (6) à compacter est alors positionné à l'intérieur de l'enceinte adiabatique (1) entre les mâchoires du dispositif (3a, 3b, 3c, 9) de compression.

Selon un mode de réalisation préféré, le système de l'invention comprend une buse rectiligne réalisée par un conduit orienté selon l'axe de compression du système. Cette buse (2a) rectiligne présente alors ainsi une longueur sensiblement égale à la longueur du récipient (6) à compresser. L'extrémité de la buse (2a) est ainsi arrangée pour être positionnée à proximité du cul du récipient (6), à une distance sensiblement égale à la hauteur du récipient (6) une fois celui-ci compressé. Cette buse (2a), préférentiellement fixe avec le bâti du système, est disposée de façon à positionner au moins un orifice de projection de vapeur à l'intérieur du récipient à compresser. Le récipient à compresser, avant l'étape de compaction, est enfilé sur la buse (2a) par un orifice, de façon préférée, par son goulot lorsque ce récipient est une bouteille.

Selon un premier mode de réalisation, l'orifice de projection (2b) de vapeur se trouve alors situé au niveau du cul de la bouteille. Ce mode de réalisation permet à la vapeur d'être directement projetée à l'intérieur du récipient à compacter pour effectuer son ramollissement. Le dispositif de compression est muni d'une paire de mâchoire (3a, 3b) dont au moins l'une (3b) d'entre elles est montée mobile et coulissante selon l'axe du récipient à compacter. Le récipient à compresser est positionné entre ces mâchoires (3a, 3b) de sorte que, lorsque ce récipient est une bouteille, le goulot de celle-ci soit positionné contre la mâchoire mobile (3b). Cette mâchoire (3b) mobile est préférentiellement montée coulissante le long de la buse (2a), de sorte que cette mâchoire (3b) est traversée par la buse (2a) au niveau d'un orifice. La bouteille à compresser (6), lorsqu'elle est enfilée sur la buse (2a) du système, est alors positionnée de sorte que son goulot est situé en regard de cet orifice de coulissement de la mâchoire (3b) sur la buse (2a).

Selon le mode de réalisation précédemment détaillé, lors de la compression de la bouteille, la vapeur est projetée par la buse (2a) au niveau du cul de la bouteille tandis que la mâchoire (3b) mobile coulisse le long de la buse (2a) en pressant la bouteille au niveau de son goulot. Bien que la projection de vapeur s'effectue au niveau du cul de la bouteille qui est la partie du récipient qui est le plus rapidement ramolli, la vapeur en étant injectée à l'intérieure de la bouteille permet également le maintien d'un chauffage à l'ensemble des différentes parois du récipient. Ce mode de réalisation permet encore de conserver une projection de vapeur à l'intérieur du récipient en cours de compactage indépendamment de la longueur du récipient, mais surtout indépendamment de l'état d'avancement de la compaction. Par ailleurs, bien que la projection de vapeur s'opère au niveau du cul de la bouteille et que la pression de la mâchoire (3b) mobile s'effectue au niveau du goulot de la bouteille, la force de compression est transmise le long des parois de la bouteille pour atteindre la partie des parois ramollie par la vapeur projetée où s'effectue la compression de la bouteille. Une fois que les mâchoires (3a, 3b) du système de compactage sont rapprochées et que le récipient (6) est compacté, l'extrémité de la buse (2a) est alors positionnée à proximité du cul du récipient (6), à une distance sensiblement égale à la hauteur du récipient (6) compressé. L'extrémité de la buse (2a) se trouve alors située au niveau du goulot du récipient (6) compressé et permet au récipient (6) d'être facilement retiré de la buse (2a) et du système de compactage.

Selon un autre mode de réalisation, la buse (2a), également rectiligne, comprend une pluralité d'orifice de projection (2b) de vapeur. Ces orifices (2b) sont arrangés pour être positionnés sur toute la longueur de la buse (2b) et permettre une projection de vapeur depuis la périphérie du corps de la buse sur les parois du récipient (6) à compacter. Ainsi la projection de vapeur est opérée sur toute la longueur de la buse (2a) et de façon homogène le long du corps du récipient (6). Au cours de la compaction du récipient (6), le récipient (6) est compressé par une pression exercée par la mâchoire (3b) mobile au niveau de son goulot et la projection de vapeur est effectuée de façon permanente contre les parois du récipient (6) en cours de compression, une partie des orifices de projection de la buse (2a) se trouvant en permanence positionnée à l'intérieur du récipient (6).

Dans ces deux modes de réalisation, la projection de vapeur par un ou plusieurs orifices (2b) de la buse (2a) est effectuée depuis l'intérieur du récipient (6), à distance de l'orifice du récipient (6). Cette projection de vapeur depuis l'intérieur du récipient (6) permet alors d'une part de remplacer rapidement l'air froid à l'intérieur du récipient (6) par déplacement en repoussant l'air froid au niveau de l'orifice du récipient (6) et d'autre part de faire circuler la chaleur projetée à l'intérieur du récipient avec un déplacement facilité de la chaleur depuis l'intérieur du récipient vers l'extérieur et une évacuation de la vapeur refroidie au niveau de l'orifice du récipient (6).

Cette mise en mouvement de la chaleur générée permet ainsi une optimisation du ramollissement de la structure plastique des parois du récipient et alors faciliter la compression et le compactage du récipient (6) en question.

Un avantage de ces modes de réalisation est de permettre, selon un mode de réalisation particulier non limitatif de l'invention, une intégration de la buse (2a) dans le mécanisme d'actionnement des mâchoires (3a, 3b). En effet, la buse (2a) peut comporter un filetage sur sa périphérie, le long de son axe, arrangé pour interagir avec un taraudage disposé sur le pourtour de l'orifice de coulissement de la mâchoire (3b). La buse (2a) est alors montée pivotante en rotation autour de son axe par rapport au bâti du système de compactage. Selon un exemple de réalisation de l'actionnement de la rotation de la buse (2a), celle-ci comporte une extrémité montée sur un moteur rotatif (9). Ce moteur rotatif (9) est arrangé pour permettre une rotation de la buse (2a) autour de son axe tout en conservant une communication étanche de l'intérieur de la buse avec le dispositif (8) de production et d'alimentation en vapeur d'eau. Le moteur rotatif (9) forme ainsi le système moteur du dispositif de l'invention avec un générateur (3c). Lorsque la buse (2a) est actionnée par le système moteur (3c, 9), il est indispensable que la buse (2a) présente une structure axiale rectiligne avec une certaine rigidité de sorte que lorsqu'elle est mise en rotation, cette buse (2a) ne présente pas un écartement de son axe par rapport à l'axe de rotation du moteur rotatif (9). Lors de la rotation de la buse (2a) autour de son axe, la mâchoire mobile (3b) grâce au taraudage de son orifice qui interagit avec le filetage sur le pourtour de la buse (2a), coulisse selon l'axe de la buse (2a) en étant maintenue fixe en rotation par rapport à ce même axe. Ce maintien fixe en rotation de la mâchoire mobile (3b) peut être réalisé, par exemple et de façon non limitative, grâce à un rail positionnée sur une paroi interne de la paroi adiabatique (1) et arrangé selon un axe parallèle à celui de la buse et qui interagit avec une rainure sur la périphérie de la mâchoire. La rotation de la buse (2a) autour de son axe, actionnée par le moteur (3c), entraine alors le coulissement par translation de la mâchoire (3b) qui demeure fixe en rotation par rapport à la buse (2a).

Cette intégration de la buse (2a) dans le mécanisme d'actionnement permet de réduire le nombre de pièces à monter pour construire le système de compactage. De plus en combinant le mécanisme de rapprochement des mâchoires (3a, 3b) au mécanisme de diffusion de vapeur, le système de l'invention permet un gain de place.

Par ailleurs, selon un mode de réalisation préféré mais non limitatif, la fabrication de la buse (2a) qui est, dans ce mode de réalisation, la pièce centrale du système de compactage selon l'invention, est effectuée par utilisation d'un conduit rectiligne axialement et/ou présentant sensiblement la forme d'une tige alésée selon son axe. Idéalement, ce conduit comporte une structure suffisamment rigide pour ne pas être déformée et générer un débattement lorsqu'elle est entraînée axialement en rotation au niveau d'une de ses extrémités. Ce conduit rectiligne est alors surmoulé sur sa périphérie par une matière solidifiable et pouvant devenir suffisamment rigide pour permettre la réalisation d'un filetage. Selon un mode de réalisation particulier de l'étape de surmoulage, ce surmoulage comporte un filetage. La matière solidifiable pour le surmoulage peut être de façon non limitative tout plastique ou résine, voire céramique connu et adapté à la réalisation de la buse de l'invention, c'est-à-dire notamment capable de résister aux températures de diffusion de la vapeur d'eau du système de compactage de l'invention.

Dans une dernière étape de la fabrication de la buse (2a), des orifices (2b) de projection de vapeur sont réalisé sur la périphérie de la buse. Dans une alternative de réalisation, les orifices de projection (2b) sont déjà réalisés sur la périphérie du conduit rectiligne ; ces orifices (2b) sont alors conservés en évitant leur obturation au cours de l'étape de surmoulage.

L'enceinte adiabatique (1) peut idéalement comprendre un couvercle (10) qui referme l'ouverture de l'enceinte (1) et par laquelle le récipient (6) à compacter est positionné dans le système. Un dispositif de sécurité peut être associé à ce couvercle (10) de sorte que le système, et notamment la commande de la projection de vapeur, ne peut pas être mis en fonctionnement si ce couvercle n'est pas correctement refermé. Ce dispositif permet ainsi d'empêcher toute projection de vapeur lors de l'ouverture de l'enceinte. Le dispositif de sécurité est donc une garanti supplémentaire quand à la prévention de risques d'accidents par brûlure.

Selon un mode de réalisation particulier, la mâchoire (3a) fixe lors de la compression du récipient (6) est réalisée par le couvercle de l'enceinte adiabatique lorsque celui-ci ferme l'enceinte. Ce mode de réalisation permet ainsi une réduction du nombre de pièces à usiner lors de la fabrication du dispositif de l'invention.

De même, l'enceinte adiabatique (1) peut comprendre un dispositif (1 b) d'évacuation de la vapeur qui est ouvert une fois que l'opération de compactage est terminée. Ce dispositif (1 b) d'évacuation participe au refroidissement du contenu de l'enceinte (1) et notamment du récipient (6) afin que celui-ci puisse être récupéré sans risque de brûlure par l'utilisateur. Selon un mode de réalisation particulier, ce dispositif (1 b) d'évacuation de vapeur est muni d'un ventilateur qui permet d'accélérer l'évacuation de la chaleur de l'enceinte (1). Il est entendu que le refroidissement du récipient compacté peut être opéré par l'intervention de tout autre dispositif connu.

Le système de compactage selon l'invention comprend idéalement un dispositif (4) de commande et de contrôle de l'invention qui est connecté d'une part au système moteur (3c, 9) du dispositif (3a, 3b, 3c, 9) de compression et d'autre part au dispositif (8) de production et d'alimentation en vapeur d'eau ou directement à la buse de ce dispositif (8). Ce dispositif (4) de commande est idéalement connecté à un ou plusieurs capteurs (5) qui permettent de renseigner sur la température à l'intérieur de l'enceinte adiabatique (1) et/ou du récipient (6) une fois que celui-ci est compacté. Par ailleurs, ce dispositif (4) de commande peut également être connecté au dispositif de refroidissement et/ou au dispositif de sécurité du couvercle.

Le dispositif (4) de commande et de contrôle gère les opérations successives de compactage du récipient notamment en ne déclenchant la projection de vapeur dans l'enceinte adiabatique (1) que lorsque celle-ci est reconnue par le dispositif de sécurité comme étant hermétiquement fermée par l'utilisateur. Une fois que le récipient à compacter est positionné entre les mâchoires du dispositif (3a, 3b, 3c, 9) de compression, le procédé de compactage opéré par le système de l'invention comprend :
- une étape de diffusion de vapeur d'eau à l'intérieur des parois du récipient (6) disposé dans l'enceinte (1) du système, ce qui conduit au réchauffement et au ramollissement des parois du récipient à compacter, la diffusion de vapeur pouvant également s'opérer directement à l'intérieur du récipient à compacter,
- une étape de rapprochement des mâchoires (3a, 3b) du dispositif (3a, 3b, 3c) de compression par déplacement d'au moins une des mâchoires,
- une étape d'évacuation de la vapeur dans l'enceinte adiabatique,
- une étape de retrait du récipient compacté et
- une étape de retour des mâchoires dans leurs positions respectives initiales.

Selon un mode de réalisation particulier, le lancement des opérations de compactage par l'utilisateur peut être déclenché depuis une interface reliée au dispositif (4) de commande et de contrôle.

Une fois que le récipient est compacté par les mâchoires du dispositif de compression, celui-ci est retiré ou éjecté soit manuellement, soit par l'intermédiaire d'un dispositif automatisé d'éjection pour rejoindre un moyen de stockage (7) formé par un réceptacle approprié. Cette opération d'éjection peut être effectuée soit avant que les mâchoires ne se desserrent pour retourner dans leur position initiale, soit à la fin de la compression avant le retour de ces mâchoires en position ouverte. Selon une variante de réalisation du dispositif d'éjection compatible avec les différentes variantes de l'invention déjà énoncée, le couvercle (10) de l'enceinte adiabatique (1) est arrangé pour récupérer le récipient (6) une fois que celui-ci est compressé. Dans un exemple de réalisation non limitatif, le couvercle est réalisé de façon à présenter la forme d'un logement (10a) suffisamment large pour recevoir le récipient (6) compressé. Ce logement (10a) comporte une ouverture (10b) destinée à être positionnée en regard du récipient adiabatique (1) du système de compactage de l'invention pour le refermer. Ce logement (10a) est arrangé pour maintenir le récipient (6) comprimé grâce à une pluralité d'anneaux (11a, 11b, 11c) en matière élastique, par exemple en caoutchouc, comportant des diamètres externes identiques mais dont les diamètres internes sont tous différents. Ces anneaux (11a, 11b, 11c) sont alors montés et positionnés de façon concentrique dans le logement (10) du couvercle dans le plan de l'ouverture (10b) et à proximité de l'ouverture (10b) du logement, de sorte que leurs diamètres externes soit en contact avec la paroi interne du logement. De plus, ces anneaux (11a, 11b, 11c) sont arrangés les uns par rapport aux autres dans le logement (10a) de façon à présenter un diamètre interne croissant depuis l'ouverture (10b) du logement vers l'intérieur du logement (10a). Lors de la compression du récipient (6), le récipient comprimé est repoussé par la mâchoire mobile (3b) dans le logement (10a) du couvercle (10) au travers des orifices internes des anneaux (11a, 11b, 11c) élastiques. Ces anneaux (11a, 11b, 11c) élastiques réalise un arrangement qui définit un espace dans le logement (10a) adapté pour y recevoir un récipient (6) compressé et capable d'être retenu grâce aux anneaux de diamètre interne plus réduit.

Selon un exemple de réalisation non-limitatif, l'éjection du récipient compressé (6) retenu dans le logement (10) du couvercle est assuré grâce à un bouton poussoir (12) qui traverse la paroi du couvercle pour appuyer sur le récipient compressé (6) et l'expulser vers l'ouverture (10b) du logement.

Il convient de noter qu'au cours du procédé de compaction, la température de la vapeur est contrôlée et gérée en permanence, notamment grâce aux capteurs de température, pour assurer une fusion optimale des parois du récipient (6).

Lors du refroidissement, lorsque la température à l'intérieur de l'enceinte adiabatique est inférieure à une température seuil, un signal est transmis au niveau de l'interface utilisateur pour prévenir de l'ouverture sécurisée de l'enceinte. De même, le dispositif de sécurité du couvercle (10) de l'enceinte peut, par exemple, être déverrouillé.

Selon une particularité de réalisation originale, le dispositif (8) de production, d'alimentation et/ou de récupération en vapeur d'eau comporte une connectique avec, par exemple, un conduit flexible. Cette connectique permet alors d'utiliser le dispositif (8) de production de vapeur comme source pour un appareillage annexe tel qu'un nettoyeur vapeur.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Système de compactage portable d'au moins un récipient (6) dont les parois présentent une structure à base de matière plastique comprenant au moins un dispositif de compression (3a, 3b, 3c, 9) formant une enceinte munie d'au moins une ouverture et d'au moins une paire de mâchoires (3a, 3b) entre lesquelles au moins un récipient (6) à compacter est destiné à être positionné, le système comprenant un dispositif (2) de production et d'alimentation de vapeur réguléé par une résistance chauffante connectée à un thermostat, le dispositif (2) de production et d'alimentation de vapeur étant associé à un dispositif de projection de vapeur d'eau à l'intérieur des parois du récipient à compacter, le dispositif de projection de vapeur étant réalisé par une buse (2a) destinée à être introduite dans le récipient (6) et dont l'orifice de projection (2b) de vapeur se trouve situé au niveau du culot du récipient, la buse (2a) étant un élément du mécanisme de rapprochement des mâchoires (3a, 3b) lors de la compression, **caracterisé en ce que** la mâchoire (3b) du dispositif de compression (3a, 3b, 3c, 9) est une mâchoire montée coulissante le long de l'axe de la buse (2a) au niveau d'un orifice traversé par la buse (2a).

2. Système de compactage de récipient selon la revendication 1, **caractérisé en ce que** la buse (2a) est orientée séton l'axe du récipient (6).

3. Système de compactage de récipient selon une des revendications précédentes, **caractérisé en ce que** la buse (2a) comporte une pluralité d'orifices (2b) de diffusion disposés sur au moins une partie de sa longueur.

4. Système de compactage de récipient selon une des revendications précédentes, **caractérisé en ce que** la buse (2a) comporte un orifice (2c) de diffusion de vapeur dans le récipient (6) positionné à une extrémité de la buse (2a).

5. Système de: compactage de récipient selon une des revendications précédentes, **caractérisé en ce que** la buse (2a) comporte un filetage disposé sur la périphérie de son axe pour actionner le déplacement d'au moins la première mâchoire (3b) par rapport à la seconde mâchoire (3a).

6. Système de compactage de récipient selon une des revendications précédentes, **caractérisé en ce que** le système comprend une enceinte adiabatique (1) à l'intérieur de laquelle est orientée la buse (2a) du dispositif de projection de vapeur et des moyens de commande de la projection de vapeur empêchant la projection de vapeur lors de l'ouverture de l'enceinte (1).

7. Système de compactage de récipient selon au moins la revendication 5, **caractérisé en ce que**: la buse (2a) est actionnée en rotation autour de son axe par un système moteur (3c, 9) pour interagir avec le taraudage d'un orifice d'une mâchoire (3b) du dispositif de compression et entrainer la translation la mâchoire (3b) le long de la buse (2a).

8. Système de compactage de récipient selon au moins la revendication 6, **caractérisé en ce que** l'enceinte adiabatique comprend un orifice (1 b) arrangé pour permettre une évacuation de la vapeur d'eau une fois la compaction du récipient (6) terminée.

9. Système de compactage de récipient selon au moins la revendication 6, **caractérisé en ce que** l'enceinte adiabatique comprend un dispositif de refroidissement du récipient compacté.

10. Système de compactage de récipient selon une des revendications précédentes, **caractérisé en ce que** le système de compactage comprend un dispositif (4) de contrôle et de commande relié à la résistance chauffante, et/ou au dispositif de projection de vapeur d'eau, et/ou à un organe du dispositif (3a, 3b, 3c, 9) de compression, et/ou à au moins un dispositif de refroidissement du récipient compacté.

11. Système de compactage de récipient selon une des revendications précédentes, **caractérisé en ce que** le système comprend au moins un capteur (5) de la température du récipient à compacter et/ou du contenu de (l'enceinte (1) adiabatique du système.

12. Système de compactage de récipient selon une des revendications précédentes, **caractérisé en ce que** le système comprend au moins un dispositif de retrait et/ou d'éjection du récipient compacté.

13. Procédé de compactage de récipient mettant en jeu un système de compactage selon une des revendication précédentes **caractérisé en ce que** le procédé comprend :
- une étape de positionnement du récipient à compacter entre les mâchoires du dispositif de compaction,
- une étape de diffusion de vapeur d'eau à l'intérieur des parois du récipient à compacter,
- une étape de chauffage des parois du récipient à compacter,
- une étape de rapprochement des mâchoires du dispositif de compression,
- une étape de refroidissement du récipient compacté, et
- une étape de retour d'au moins une des mâchoires dans sa position initiale.

## Claims

1. Portable system for compacting at least one container (6) of which the walls have a basic structure made from plastic material comprising at least one compression device (3a, 3b, 3c; 9) forming a chamber provided with at least one opening and at least one pair of jaws (3a, 3b) between which at least a container (6) to be compacted is intended to be positioned, the system comprising a device (2) for production and supply of vapour regulated by a heating resistance connected to a thermostat, the device (2) for production and supply of vapour being associated with a device for projection of water vapour inside the walls of the container to be compacted, the vapour projection device being formed by a nozzle (2a) which is intended to be introduced into the container (6) and of which the vapour projection orifice (2b) is situated at the level of the base of the container, the nozzle (2a) being an element of the mechanism for bring the jaws (3a, 3b) together during the compression, **characterised in that** the jaw (3b) of the compression device (3a, 3b, 3c, 9) is a jaw which is mounted so as to slide along the axis of the nozzle (2a) at the level of an orifice through which the nozzle (2a) passes.

2. System for compacting a container as claimed in Claim 1, **characterised in that** the nozzle (2a) is oriented along the axis of the container (6).

3. System for compacting a container as claimed in any one of the preceding claims, **characterised in that** the nozzle (2a) includes a plurality of diffusion orifices (2b) disposed on at least a part of its length.

4. System for compacting a container as claimed in any one of the preceding claims, **characterised in that** the nozzle (2a) includes an orifice (2c) for diffusion of vapour into the container (6) positioned at end of the nozzle (2a)..

5. System for compacting a container as claimed in any one of the preceding claims, **characterised in that** the nozzle (2a) includes a thread disposed on the periphery of its axis in order to actuate the displacement of at least the first jaw (3b) with respect to the second jaw (3a).

6. System for compacting a container as claimed in any one of the preceding claims, **characterised in that** the system comprises an adiabatic chamber (1) inside which is oriented the nozzle (2a) of the vapour projection device and means for controlling the projection of vapour which prevent the projection of vapour during opening of the chamber (1).

7. System for compacting a container as claimed in at least Claim 5, **characterised in that** the nozzle (2a) is actuated in rotation about its axis by a motor system (3c, 9) in order to interact with the tapping of an orifice of a jaw (3b) of the compression device and to drive the translation of the jaw (3b) along the nozzle (2a).

8. System for compacting a container as claimed in at least Claim 6, **characterised in that** the adiabatic chamber comprises an orifice (1b) arranged so as to enable evacuation of the water vapour once the compaction of the container (6) is ended.

9. System for compacting a container as claimed in at least Claim 6, **characterised in that** the adiabatic chamber comprises aa device for cooling the compacted container.

10. System for compacting a container as claimed in any one of the preceding claims, **characterised in that** the compacting system comprises a monitoring and control device (4) connected to the heating resistance, and/or to the water vapour projection device, and/or to an element of the compression device (3a, 3b, 3c, 9), and/or to at least one device for cooling the compacted container.

11. System for compacting of container as claimed in any one of the preceding claims, **characterised in that** the system comprises at least one sensor (5) for sensing the temperature of the container to be compacted and/or of the contents of the adiabatic chamber (1) of the system.

12. System for compacting a container as claimed in any one of the preceding claims, **characterised in that** the system comprises at least one device (5) for withdrawal and/or ejection of the compacted container.

13. Method of compacting a container using a compacting system as claimed in any one of the preceding claims, **characterised in that** the method comprises:
- a step of positioning of the container to be compacted between the jaws of the compaction device,
- a step of diffusion of water vapour inside the walls of the container to be compacted,
- a step of heating of the walls of the container to be compacted,
- a step of bringing the jaws of the compression device together,
- a step of cooling of the compacted container, and
- a step of returning at least one of the jaws to its initial position.

## Patentansprüche

1. Tragbares Verdichtungssystem für zumindest einen Behälter (6), dessen Wände eine Struktur auf der Basis eines Kunststoffmaterials darstellen, mit
zumindest einer Komprimiervorrichtung (3a, 3b, 3c, 9), die ein Gehäuse bildet, das mit zumindest einer Öffnung und zumindest einem Paar von Backen (3a, 3b) versehen ist, zwischen denen zumindest ein zu verdichtender Behälter (6) angeordnet zu werden bestimmt ist,
wobei das System eine Vorrichtung (2) zum Erzeugen und Zuführen von Dampf enthält, die über einen mit einem Thermostat verbundenen Heizwiderstand geregelt wird,
wobei die Vorrichtung (2) zum Erzeugen und Zuführen von Dampf mit einer Vorrichtung zum Spritzen von Wasserdampf in den Innenraum der Wände des zu verdichtenden Behälters verbunden ist,
wobei die Vorrichtung zum Spritzen von Dampf durch eine Düse (2a) verwirklicht ist, die dazu bestimmt ist, in den Behälter (6) eingeführt zu werden, und deren Spritzöffnung (2b) für den Dampf sich auf der Höhe der Bodenkappe des Behälters befindet,
wobei die Düse (2a) ein Element des Annäherungsmechanismus der Backen (3a, 3b) bei der Komprimierung ist,
**dadurch gekennzeichnet, dass**
die Backe (3b) der Komprimiervorrichtung (3a, 3b, 3c, 9) eine Backe ist, die entlang der Achse der Düse (2a) gleitend auf der Höhe einer Öffnung angebracht ist, die von der Düse (2a) durchquert wird.

2. Verdichtungssystem für einen Behälter gemäß Anspruch 1, **dadurch gekennzeichnet, dass** die Düse (2a) entsprechend der Achse des Behälters (6) orientiert ist.

3. Verdichtungssystem für einen Behälter gemäß einem der vorigen Ansprüche, **dadurch gekennzeichnet, dass** die Düse (2a) eine Mehrzahl von Öffnungen (2b) zur Diffusion enthält, die zumindest entlang einem Abschnitt seiner Länge angeordnet sind.

4. Verdichtungssystem für einen Behälter gemäß einem der vorigen Ansprüche, **dadurch gekennzeichnet, dass** die Düse (2a) eine Öffnung (2c) zur Diffusion von Dampf in den Behälter (6) enthält, die an einem Ende der Düse (2a) angeordnet ist.

5. Verdichtungssystem für einen Behälter gemäß einem der vorigen Ansprüche, **dadurch gekennzeichnet, dass** die Düse (2a) ein Gewinde enthält, das über den Umfang ihrer Achse angeordnet ist, um die Bewegung zumindest der ersten Backe (3b) relativ zur zweiten Backe (3a) abzutreiben.

6. Verdichtungssystem für einen Behälter gemäß einem der vorigen Ansprüche, **dadurch gekennzeichnet, dass** das System enthält:
ein adiabatisches Gehäuse (1), in dessen Inneren die Düse (2a) der Vorrichtung zum Spritzen von Dampf angeordnet ist, und
ein Steuermittel für das Spritzen von Dampf, das das Spritzen von Dampf aus der Öffnung des Gehäuses (1) verhindert.

7. Verdichtungssystem für einen Behälter zumindest gemäß Anspruch 5, **dadurch gekennzeichnet, dass** die Düse (2a) von einem Motorsystem (3c, 9) in Drehung um ihre Achse angetrieben wird, um mit dem Innengewinde einer Öffnung einer Backe (3b) der Komprimiervorrichtung zusammenzuwirken und die Translation der Backe (3b) entlang der Düse (2a) anzutreiben.

8. Verdichtungssystem für einen Behälter zumindest gemäß Anspruch 6, **dadurch gekennzeichnet, dass** das adiabatische Gehäuse eine Öffnung (1b) enthält, die angeordnet ist zum Ermöglichen eines Ablassen des Wasserdampfs, nachdem die Verdichtung des Behälters (6) beendet ist.

9. Verdichtungssystem für einen Behälter zumindest gemäß Anspruch 6, **dadurch gekennzeichnet, dass** das adiabatische Gehäuse eine Vorrichtung zum Kühlen des verdichteten Behälters enthält.

10. Verdichtungssystem für einen Behälter gemäß einem der vorigen Ansprüche, **dadurch gekennzeichnet, dass** das Verdichtungssystem eine Vorrichtung (4) zum überwachen und Steuern enthält, die mit dem Heizwiderstand und/oder der Vorrichtung zum Spritzen von Wasserdampf und/oder einem Element der Komprimiervorrichtung (3a, 3b, 3c, 9) und/oder zumindest einer Vorrichtung zum Kühlen des verdichteten Behälters verbunden ist.

11. Verdichtungssystem für einen Behälter gemäß einem der vorigen Ansprüche, **dadurch gekennzeichnet, dass** das System zumindest einen Sensor (5) für die Temperatur des zu verdichtenden Behälters und/oder des Inhalts des adiabatische Gehäuses (1) des Systems enthält.

12. Verdichtungssystem für einen Behälter gemäß einem der vorigen Ansprüche, **dadurch gekennzeichnet, dass** das System zumindest eine Vorrichtung zum Zurückziehen und/oder zum Auswerfen des verdichteten Behälters enthält.

13. Verfahren zum Verdichten eines Behälters unter Verwendung eines Verdichtungssystems gemäß einem der vorigen Ansprüche, **dadurch gekennzeichnet, dass** das Verfahren enthält:
einen Schritt des Positionierens des zu verdichtenden Behälters zwischen den Backen der Komprimiervorrichtung,
einen Schritt des Diffundierens von Wasserdampf in den Innenraum der Wände des zu verdichtenden Behälters,
einen Schritt des Erwärmens der Wände des zu verdichternden Behälters,
einen Schritt des Annäherns der Backen der KomprimierVorrichtung,
einen Schritt des Abkühlens des verdichteten Behälters und
einen Schritt des Zurückziehens zumindest einer der Backen in ihre Anfangsstellung.
